# EUROPEAN PATENT APPLICATION

(11) **EP 0 708 056 A1**
(43) Date of publication of application: **24.04.1996**
(21) Application number: 95116359.1
(22) Date of filing: 17.10.1995
(51) Int. Cl.: C01F 7/00, A01G 9/14

(54) **Hydrotalcite compound, process for producing the same, infrared absorber and agricultural film**

(30) Priority: 21.10.1994 JP 282497/94; 12.12.1994 JP 332088/94; 20.09.1995 JP 266236/95
(71) Applicant: Fuji Chemical Industry Co., Ltd., Toyoma-ken (JP)
(72) Inventor: Hosokawa, Terumasa, Toyama-ken (JP); Murakami, Tatuo, Nakashinkawa-gun, Toyoma-ken (JP); Takadou, Kanemasa, Nei-gun, Toyama-ken (JP)
(74) Representative: Pätzold, Herbert, Dr.-Ing.

(57) **Abstract**

An infrared absorber having a high infrared absorptivity is provided which is suitable for use in an agricultural film. The infrared absorber comprises as an active ingredient a hydrotalcite compound represented by the formula:

(Mg and/or Zn)ₐAl₂(condensed silicate ion and/or condensed phosphate ion)^{m-}_{2/m}·bH₂O

wherein a satisfies the relationship 2 ≦ a ≦ 8, m is an integer of 1 or greater, b satisfies the relationship b ≦ 4 and the condensed silicate ion and/or condensed phosphate ion contains at least 2 mol of Si and/or P,
said hydrotalcite compound having a crystal surface coated with 0.1 to 10% by weight of an anionic surfactant, and
said hydrotalcite compound having intercalated anions composed mainly of condensed silicate ions and/or condensed phosphate ions. Infrared rays whose wavelengths are in the range of 5 to 30 µm are very effectively absorbed by virtue of the structure having silicate and/or phosphate components intercalated in high proportion.

## Description

### Background of The Invention

### Field of The Invention

The present invention relates to a novel hydrotalcite compound capable of effectively absorbing infrared rays whose wavelengths are in the range of 5 to 30 µm especially in the vicinity of 10 µm, a process for producing the same, an infrared absorber comprising the above hydrotalcite compound and an agricultural film comprising the hydrotalcite compound as an active ingredient.

### Discussion of Related Art

In recent years, growing in greenhouses or plastic tunnels has come to be extensively carried out with the use of agricultural films made from synthetic resins. The more effective the heat insulation for the greenhouses or plastic tunnels, the greater the economic advantage. Therefore, the agricultural films for use therein are required to have properties such that infrared rays radiated from the ground and plants are prevented from being liberated outside the greenhouses or plastic tunnels by the absorption, reflection, etc. during the night while the sunlight is transmitted at a high transmission rate into the greenhouses or plastic tunnels in the daytime. The spectral energy distribution of infrared rays radiated from the ground and plants ranges from 5 to 30 µm in wavelength. The energy distribution of infrared rays radiated from the ground and plants approximates the distribution of radiation from a black body having a temperature identical thereto, and it has been found that the energy distribution can be approximately expressed by Planck's black body radiation formula. According to Planck's law regarding the energy of radiation from black body, infrared rays having wavelengths ranging from 5 to 30 µm are radiated and especially the maximum radiation rate is attained at a wavelength of 10 µm. Thus, for improving the infrared absorptivity of an agricultural film, use has been made of various inorganic powders having respective absorptivities in the infrared wavelength range of 5 to 30 µm.

Specifically, the infrared absorbers which can suitably be incorporated in agricultural films should have the following properties:
(1) they absorb infrared rays having wavelengths ranging from 5 to 30 µm and exhibit especially high absorptivities as for infrared rays of high radiation energy having wavelengths being in the vicinity of 10 µm;
(2) their refractive index values nearly range from about 1.45 to 1.55 which are those of resins in use in order to keep high the transmission of the sunlight through the agricultural film in the daytime; and
(3) they can each be compounded in an agricultural film in particulate form with high dispersibility and without detriment to the mechanical strength, appearance and light transmittance of the agricultural film.

Among the conventional techniques for producing the above agricultural film capable of absorbing infrared rays, a method is known in the art in which the agricultural film is loaded with an inorganic powder such as magnesium carbonate, magnesium silicate, silicon dioxide, aluminum oxide, barium sulfate, calcium sulfate, magnesium hydroxide, aluminum hydroxide, calcium hydroxide, a phosphate or a silicate.

However, these inorganic powders have both respective merits and demerits and none of them fully satisfies the above requirements for properties. For example, silicon dioxide and magnesium silicate are excellent in the infrared absorptivity which is one of the above required properties but have problems in the refractive index and dispersibility with the result that the final agricultural film has poor light transmittance. Thus, they are not suitable for use in the agricultural film.

On the other hand, a technique regarding an agricultural film in which a hydrotalcite compound is employed as a composition formulated so as to compensate for the above drawbacks has been disclosed in Japanese Patent Application Laid-Open Specification No. 104141/1985. This conventional hydrotalcite compound has a refractive index close to that of the employed resin, so that it is excellent in the transparency exhibited by the agricultural film loaded with the same.

However, not only is the content of silicate and/or phosphate ions low in the above hydrotalcite compound but also the ions are monomolecular ions such as SiO₃²⁻ and HPO₄²⁻, so that the resultant agricultural film does not have satisfactory infrared absorptivity. Moreover, these ions react with M²⁺ and/or M³⁺ of M²⁺₁₋ₓ M³⁺(OH)₂ composing the skeletal structure of hydrotalcite to thereby form a silicate and/or a phosphate salt. Thus, strong coagulating properties occur, resulting in a problem of deterioration in the dispersibility in the resin.

### Summary of The Invention

The present invention has been made in view of the above state of the prior art. The present invention produced a novel hydrotalcite compound having a silicate and/or phosphate component intercalated in high proportion while preventing the destruction of the skeletal structure of hydrotalcite by silicate and/or phosphate ions.

It is, therefore, an object of the present invention to provide a hydrotalcite compound having excellent infrared absorptivity and a process for producing the same.

It is another object of the present invention to provide an infrared absorber comprising the above hydrotalcite compound as an active component which ensures excellent infrared absorptivity, transparency and dispersibility and also to provide an agricultural film comprising this infrared absorber which has excellent mechanical strength.

The above silicate and phosphate components ensure high absorptivity of infrared rays having respective wavelengths of about 10 µm, so that they are indispensable components for endowing the agricultural film with high heat insulating properties.

The foregoing and other objects, features and advantages of the present invention will become apparent from the following detailed description and appended claims taken in connection with the accompanying drawings.

### Brief Description of The Drawings

In the drawings:
Fig. 1 is an infrared absorption spectrum of the product obtained in Example 1;
Fig. 2 is an infrared absorption spectrum of the product obtained in Example 2;
Fig. 3 is an infrared absorption spectrum of the product obtained in Example 3;
Fig. 4 is an infrared absorption spectrum of the product obtained in Example 4;
Fig. 5 is an infrared absorption spectrum of the product obtained in Example 5;
Fig. 6 is an infrared absorption spectrum of the product obtained in Example 6;
Fig. 7 is an infrared absorption spectrum of the product obtained in Example 7;
Fig. 8 is an infrared absorption spectrum of the product obtained in Example 8;
Fig. 9 is an infrared absorption spectrum of the product obtained in Example 9;
Fig. 10 is an infrared absorption spectrum of the product obtained in Example 10; and
Fig. 11 is powder X-ray diffraction spectra of the products obtained in Examples 1 to 6.

### Detailed Description of The Invention

The inventors have made extensive and intensive studies. As a result, they have found that the use of at least one monovalent anion selected from among chloride and other halide ions, nitrate ion and acetate and other monocarboxylate ions as a raw material enables exchange between the above ion and a condensed silicate ion and/or a condensed phosphate ion without destroying the skeleton, thereby enabling intercalation of a silicate component and/or a phosphate component in a high content.

Further, in the present invention, previously coating the crystal surface of particulate hydrotalcite compound not containing silicate ions and/or phosphate ions with an anionic surfactant prevents the destruction of the skeletal structure by silicate ions and/or phosphate ions, and subsequent exchange with condensed silicate and/or phosphate ions enables intercalation of a silicate component and/or a phosphate component in a high content. This is preferred from the viewpoint that the skeletal structure is protected.

The hydrotalcite compound provided by the present invention is represented by the formula:

(Mg and/or Zn)ₐAl₂(condensed silicate ion and/or condensed phosphate ion)^{m-}_{2/m}·bH₂O (1)

wherein a satisfies the relationship 2 ≦ a ≦ 8, m is an integer of 1 or greater, b satisfies the relationship b ≦ 4 and the condensed silicate ion and/or condensed phosphate ion contains at least 2 mol of Si and/or P,
the hydrotalcite compound having a crystal surface coated with 0.1 to 10% by weight of an anionic surfactant, and
the hydrotalcite compound having intercalated anions composed mainly of condensed silicate ions and/or condensed phosphate ions.

The hydrotalcite compound of the present invention is preferred to have a BET specific surface area ranging from 1 to 30 m²/g and an average secondary particle size ranging from 0.05 to 2 µm from the viewpoint that it can be blended in the resin with good dispersion. A phosphoric ester can be mentioned as a suitable example of the anionic surfactant employed to coat the hydrotalcite compound. In the above chemical formula, the condensed silicate ion and/or phosphate ion is in various forms and the definite form thereof is not necessarily seen despite analyses conducted. In the present invention, these condensed ions are incorporated in an amount of at least 2 mol in terms of Si and/or P per mol of Al₂O₃.

Examples of condensed silicate ions suitable for use in the present invention include No. 2 and No. 3 water glasses and infinite-chain silicate ions represented by the formula:

(SiO₃²⁻)ₙ

wherein n is a number of at least 2. Examples of condensed phosphate ions suitable for use in the present invention include cyclic polyphosphate ions represented by the formula:

(PₙO₃ₙ)ⁿ⁻

wherein n is a number of at least 3, and P₃O₉³⁻ and other infinite-chain metaphosphate ions represented by the formula:

[(PO₃)ₙ]ⁿ⁻.

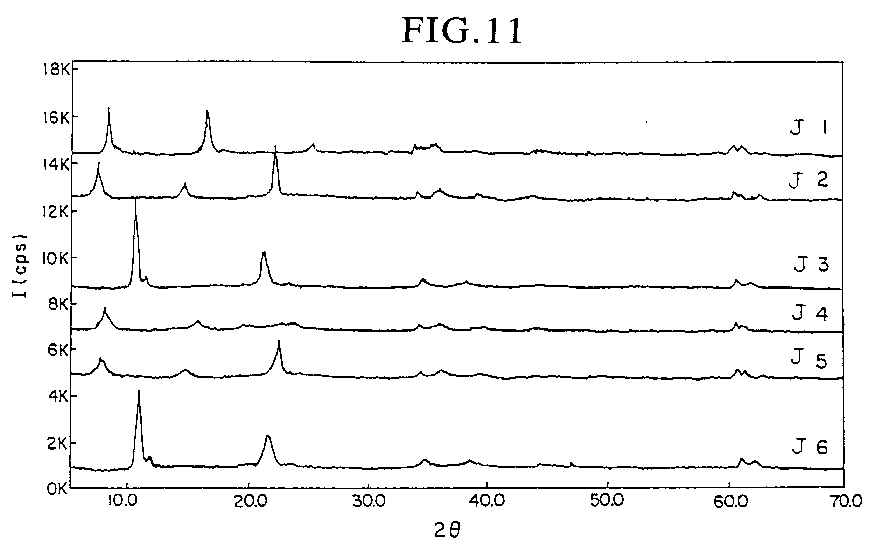

These ions may be used either individually or in combination. The hydrotalcite compound having a condensed silicate intercalated therein is distinct from other hydrotalcite compounds in the analysis using powder X-ray diffraction, and its maximum spacing is as large as 10 Å or greater. In this connection, reference is made to Fig. 11.

The BET specific surface area can be measured by the customary method in which nitrogen adsorption is carried out at the temperature of liquid nitrogen. The average secondary particle size has been determined by a method comprising adding sample powder to an organic solvent such as ethanol or n-hexane, dispersing by ultrasonic, dropping the dispersion on a sample mount for a microscope, drying it and effecting a microscopic observation. Both an electron microscope and an optical microscope can be used in the microscopic observation.

The hydrotalcite compound of the present invention can be produced preferably by subjecting a hydrotalcite compound having, intercalated therein, at least one anion selected from the group consisting of halide, nitrate and monocarboxylate (e.g., acetate) ions and condensed silicate ions and/or condensed phosphate ions to ion exchange reaction.

Specifically, the hydrotalcite compound in which any of ions such as chloride and other halide ions, nitrate ion and acetate and other monocarboxylate ions is intercalated can be obtained by appropriately selecting and combining raw materials. Alternatively, it can be obtained by treating a carbonate hydrotalcite compound with an appropriate acid.

In particular, the hydrotalcite compound can be obtained by reacting a water-soluble aluminum compound with a water-soluble magnesium compound in an aqueous solution whose pH is kept at about 8 to 10. Examples of suitable water-soluble aluminum compounds include sodium aluminate, aluminum sulfate, aluminum chloride, aluminum nitrate and aluminum acetate. Examples of suitable water-soluble magnesium compounds include magnesium chloride, magnesium nitrate, magnesium sulfate and magnesium bicarbonate. The hydrotalcite compound having a monovalent anion intercalated therein can directly be obtained by the use of an aqueous solution containing a monovalent anion. Otherwise, an acid treatment follows to thereby obtain the desired hydrotalcite compound.

In the above reaction, an alkali such as sodium hydroxide or sodium carbonate can be used as a pH regulator according to necessity.

The novel hydrotalcite compound of the present invention can be produced by a process comprising adding a water-soluble condensed silicate salt and/or a water-soluble condensed phosphate salt to a liquid containing the above hydrotalcite compound having a monovalent anion intercalated therein to thereby react them and performing filtration and drying according to the customary procedure. Water glass such as No. 2 or No. 3 water glass can be used as a preferred condensed silicate salt. Tripolyphosphoric acid, metaphosphoric acid, hexametaphosphoric acid or an alkali metal or ammonium salt thereof can be used as a preferred condensed phosphate salt.

In the above reaction, according to necessity, hydrothermal treatment can be conducted with the use of an autoclave or the like to thereby regulate the BET specific surface area and the secondary particle size of the hydrotalcite compound. Hydrothermal treatment is conducted at an appropriate temperature selected within the range of 105 to 200°C. The thus obtained hydrotalcite compound of the present invention contains at least 2 mol of silicic acid (SiO₂) and/or phosphoric acid (HPO₃) per mol of Al₂O₃ and can be used as an excellent infrared absorber.

The above hydrotalcite compound of the present invention can be used either individually or in combination with another additive as an effective infrared absorber. Any other additive can be employed as long as it is not detrimental to the infrared absorptivity of the hydrotalcite compound of the present invention.

In practical use, the infrared absorber of the present invention is kneaded into the resin. In this kneading, an anionic surfactant surface treatment is added to improve the dispersion of the hydrotalcite compound in the resin. Examples of the anionic surfactants for use as the surface treatments include alkali metal salts of higher fatty acids such as sodium laurate, potassium laurate, sodium oleate, potassium oleate, sodium stearate, potassium stearate, sodium palmitate, potassium palmitate, sodium caprate, potassium caprate, sodium myristate, potassium myristate and potassium linoleate and higher fatty acids such as lauric acid, palmitic acid, oleic acid, stearic acid, capric acid, myristic acid and linoleic acid and phosphoric esters thereof. Among these, phosphoric esters are preferred which themselves absorb infrared rays having wavelengths ranging from 5 to 30 µm and exhibit especially high absorptivities as for infrared rays having wavelengths being in the vicinity of 10 µm and which do not hinder the reaction in the incorporation of condensed silicate ion and/or condensed phosphate ion into the skeletal structure of hydrotalcite.

The surface treatment is added in an appropriate amount selected within the range of 0.1 to 10% by weight, preferably 0.5 to 6% by weight. When the amount is less than 0.1% by weight, the effects of protecting the skeletal structure of the hydrotalcite and increasing the compatibility with the resin are unsatisfactory. On the other hand, when the amount exceeds 10% by weight, the protecting effect is satisfactory but is accompanied by economic disadvantage. The surface treating operation can be easily conducted according to the customary procedure which may be carried out in wet form or dry form.

The agricultural film of the present invention is produced by kneading the above hydrotalcite compound into a thermoplastic resin. Any one can be selected from among a vinyl chloride resin, an olefin resin and an ethylene/vinyl acetate copolymer resin to use it as the thermoplastic resin. The hydrotalcite compound having a crystal surface coated with an anionic surfactant exhibits improved dispersibility as compared with that of the one provided with no coating in the kneading into the resin. Especially, when the employed anionic surfactant is a phosphoric ester, the phosphoric ester itself effectively absorbs infrared rays, so that advantageously the infrared absorptivity of the resultant agricultural film is further improved as compared with that of the one provided with no coating.

The agricultural film is loaded with 1 to 20% by weight of the hydrotalcite compound. When it is less than 1% by weight, the absorption of infrared rays is not satisfactory. On the other hand, when the loading exceeds 20% by weight, the agricultural film has poor transmittancy and mechanical strength.

Examples of the thermoplastic resins to be selected for use in the present invention include polyvinyl chloride; polymers and copolymers prepared from polyvinyl chloride and another resin such as vinylidene chloride, ethylene, propylene, acrylonitrile, vinyl acetate, maleic acid, metaphosphoric acid, acrylic acid or methacrylic acid resin; polymers and copolymers prepared from an olefin such as ethylene, propylene, butene-1 or 4-methylpentene-1; and copolymers prepared from the above resin and a vinyl acetate or acrylic resin.

The agricultural film of the present invention may be compounded according to necessity with various plastic additives such as a plasticizer, a lubricant, a heat stabilizer, a photostabilizer, an antioxidant, an antistatic agent, a pigment, an ultraviolet absorber, an antifogging agent and a dye.

The plasticizer plasticizes the thermoplastic resin used in the present invention. Examples of suitable plasticizers include low-molecular-weight polyhydric alcohols such as glycerol, ethylene glycol, triethylene glycol and sorbitol. These polyhydric alcohols also have film antifogging activity. Examples of suitable lubricants include fatty acids such as stearic acid and palmitic acid, amides of such fatty acids and liquid paraffin.

Examples of suitable heat stabilizers include metal salts prepared from a metal such as Ca, Ba, Pb, Sn or Zn and an inorganic acid such as phosphoric or sulfuric acid or a fatty or organic acid such as stearic, capric, lauric, myristic or palmitic acid. Examples of suitable photostabilizers include hindered amine compounds, cresols, melamine and benzoic acid. With respect to the antioxidant, any of phenolic, phosphoric and sulfuric ones can be used. Polyoxyethylenealkylamine, polyglycol ether and the like can be used as antistatic agents. Although those having high transmittancy are preferred, there is no particular limit on the pigment and the dye.

Conventional benzophenone, benzotriazole and salicylic ester ultraviolet absorbers and the like can be used in the present invention. Nonionic, anionic and cationic surfactants can be used as the antifogging agent, which include, for example, fatty acid esters of polyhydric alcohols such as sorbitan and glycerol, their alkylene oxide adducts and polyoxyalkylene ethers. The above plastic additives can be compounded into the agricultural film either individually or in appropriate combination in amounts not particularly limited as long as the compounding is not detrimental to the properties of the agricultural film.

The above hydrotalcite compound and plastic additives are compounded into the thermoplastic resin by weighing out appropriate amounts thereof, putting them in a mixer such as a ribbon blender, a Banbury mixer, a supermixer or a Henschel mixer and operating the mixer. The resultant composition is subjected to the conventional processing such as inflation, calendering or T-die extrusion, thereby obtaining a film. Thus, the agricultural film of the present invention can be obtained.

The agricultural film of the present invention may have its one side or both sides provided with another resin layer, thereby obtaining a multilayer film. This multilayer film can be prepared by a lamination such as dry lamination or heat lamination or other appropriate multilayer building means such as T-die coextrusion or inflation coextrusion. The thus produced agricultural film has a thickness appropriately selected within the range of 10 to 300 µm from the viewpoint that the sunlight is transmitted, the air does not permeate, the strength is satisfactory and the handling is easy.

### Effect of The Invention

The hydrotalcite compound of the present invention takes a novel structure having at least 2 mol, per Al, of condensed silicate ions and/or condensed phosphate ions intercalated without suffering from destruction of the skeleton of the hydrotalcite. The process of the present invention effectively produces this hydrotalcite compound.

The infrared absorber of the present invention comprises as an active ingredient the above hydrotalcite compound containing silicate and/or phosphate components in high proportion, so that it can absorb infrared rays having wavelengths ranging from 5 to 30 µm and exhibits especially high absorptivities as for infrared rays having wavelengths being in the vicinity of 10 µm.

The agricultural film of the present invention is one obtained by kneading the above infrared absorber into a thermoplastic resin. Thus, not only is the infrared absorptivity thereof high but also the agricultural film is transparent, is excellent in the heat insulation and transmittancy and effectively absorbs infrared rays radiated from the ground and plants. Therefore, the agricultural film is suitable for use in the greenhouse culture such as growing in a greenhouse or plastic tunnel.

### Preferred Embodiment of The Invention

The present invention will now be described in greater detail with reference to the following Examples and Comparative Examples, which should not be construed as limiting the scope of the invention.

### Example 1

0.8 liter of an aqueous solution having, dissolved therein, 132 g of aluminum sulfate (18.35% by weight in terms of Al₂O₃), 1 liter of an aqueous solution having, dissolved therein, 184 g of magnesium chloride (19.4% by weight in terms of MgO) and 0.2 liter of an aqueous solution having, dissolved therein, 21.3 g of sodium carbonate were added under agitation to 0.3 liter of water, thereby effecting reaction. During the reaction, the pH of the mixture was adjusted to 9 - 10 with the use of sodium hydroxide.

The thus obtained 2 liters of reaction mixture was autoclaved and treated with 5 wt.% nitric acid (molar ratio of HNO₃ to Al₂O₃ = 2). Subsequently, 1 liter of an aqueous solution having, dissolved therein, 61 g of sodium silicate (29.2% by weight in terms of SiO₂) and 125 g of sodium polyphosphate (58% by weight in terms of Na₅P₃O₁₀) was added to the reaction mixture and agitated for 30 min to thereby effect intercalation of the anions. Thereafter, filtration, washing and drying were conducted. Thus, 115 g of white powder was obtained.

The above powder had the following composition:

Mg_{4.4}·Al₂(Si₃O₇)_{0.5}(P₆O₁₆)_{0.5}(OH)_{12.8}·0.3H₂O.

The thus obtained 100 g of powder was suspended in 2 liters of water. 4.2 g of phosphoric ester was added to the suspension, followed by agitation, washing, filtration and drying. Thus, 102 g of surface-treated product was obtained.

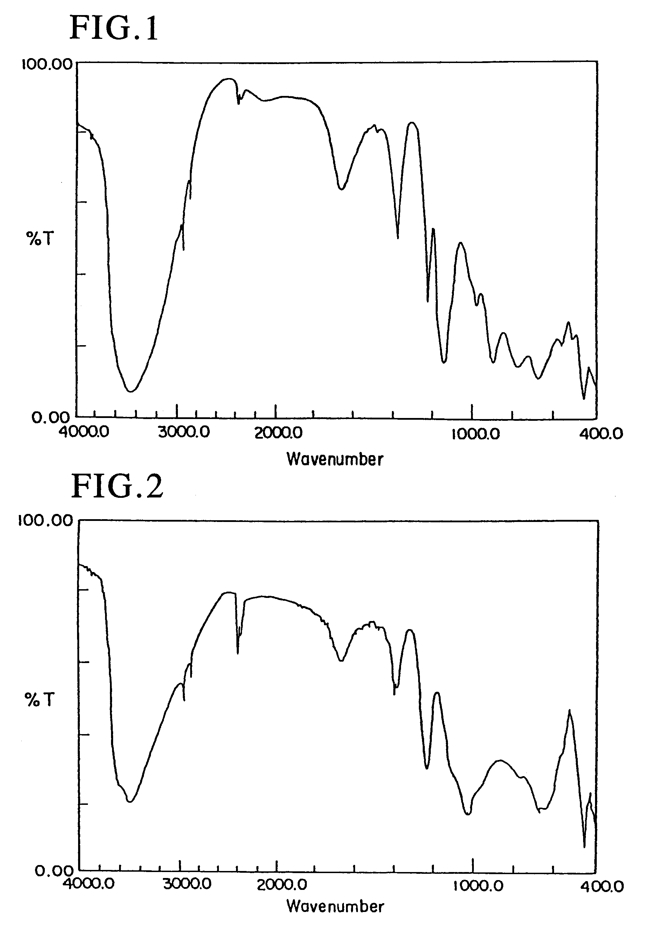

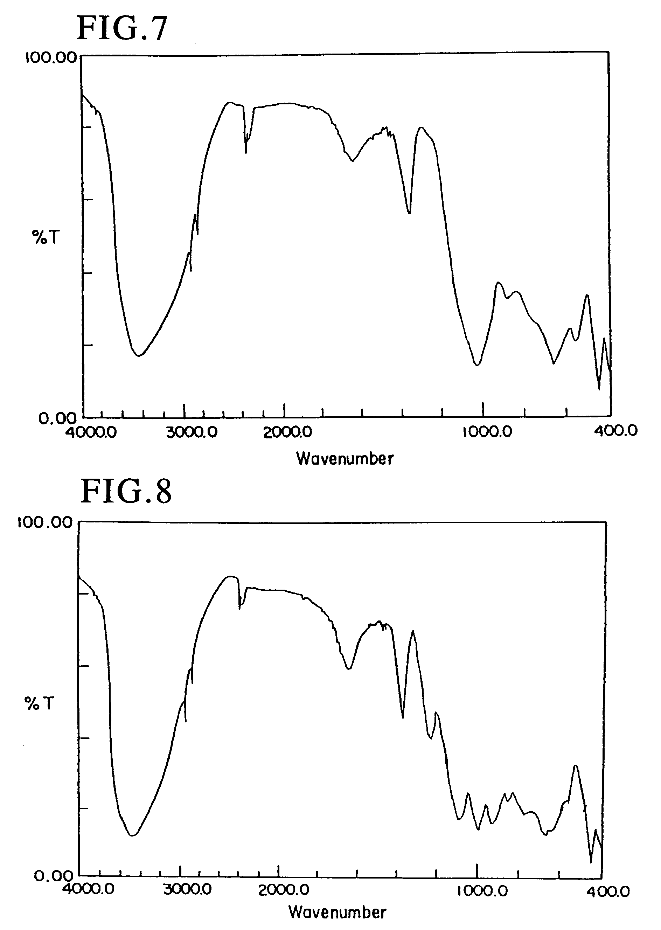

This surface-treated product had a coating ratio of 4%, a BET specific surface area of 15.3 m²/g and an average secondary particle size of 1.1 µm. The XRD layer spacing was 10.4 Å as shown in Fig. 7. The surface-treated powder was analyzed by means of FT/IR8900 manufactured by Japan Spectroscopic Co., Ltd., thereby obtaining an infrared absorption spectrum. The result is shown in Fig. 1.

### Example 2

0.8 liter of an aqueous solution having, dissolved therein, 151 g of aluminum nitrate (13.3% by weight in terms of Al₂O₃) and 1 liter of an aqueous solution having, dissolved therein, 229 g of magnesium nitrate (15.6% by weight in terms of MgO) were added under agitation to 0.2 liter of water, thereby effecting reaction. During the reaction, the pH of the mixture was adjusted to 9 - 10 with the use of sodium hydroxide. The thus obtained 2 liters of reaction mixture was autoclaved. Subsequently, 1 liter of an aqueous solution having, dissolved therein, 122 g of sodium silicate (29.2% by weight in terms of SiO₂) was added to the reaction mixture and agitated for 30 min to thereby effect intercalation of the anions. Thereafter, filtration, washing and drying were conducted. Thus, 101 g of white powder was obtained.

The above powder had the following composition:

Mg₄·Al₂(Si₃O₇)_{1.0}(OH)_{12.8}·2H₂O.

The thus obtained 100 g of powder was suspended in 2 liters of water. 2.5 g of phosphoric ester was added to the suspension, followed by agitation, washing, filtration and drying. Thus, 101.8 g of surface-treated product was obtained.

This surface-treated product had a coating ratio of 2.5%, a BET specific surface area of 13.9 m²/g and an average secondary particle size of 1.5 µm. The XRD layer spacing was 11.74 Å as shown in Fig. 11. Fig. 2 shows an infrared absorption spectrum of the powder obtained in this Example.

### Examples 3 to 9

The compounds of Examples 3 to 9 were synthesized from the raw materials specified in Tables 1 and 2 according to the same procedure as in Example 1. The results of Examples 3 to 9 are as specified in Tables 1 and 2. The following chemical formulae represent the respective compositions of powders prior to surface treatment obtained in Examples 3 to 9.

### Example 3:

Mg_{4.4}·Al₂(P₆O₁₆)_{1.0}(OH)_{12.8}·0.3H₂O,

### Example 4:

Mg_{4.3}·Al₂(Si₃O₇)_{0.5}(P₆O₁₆)_{0.5}(OH)_{12.6}·0.4H₂O,

### Example 5:

Mg_{4.3}·Al₂(Si₃O₇)_{1.0}(OH)_{12.6}·0.5H₂O,

### Example 6:

Mg_{4.3}·Al₂(Si₃O₇)_{0.33}(P₆O₁₆)_{0.67}(OH)_{12.6}·0.3H₂O,

### Example 7:

Mg_{4.4}·Al₂(P₁₂O₃₁)_{1.0}(OH)_{12.8}·0.5H₂O,

### Example 8:

Mg_{4.3}·Al₂(Si₆O₁₃)_{0.5}(P₁₂O₃₁)_{0.5}(OH)_{12.6}·0.8H₂O,

and

### Example 9:

Mg_{4.3}·Al₂(Si₆O₁₃)_{1.0}(OH)_{12.6}·0.4H₂O.

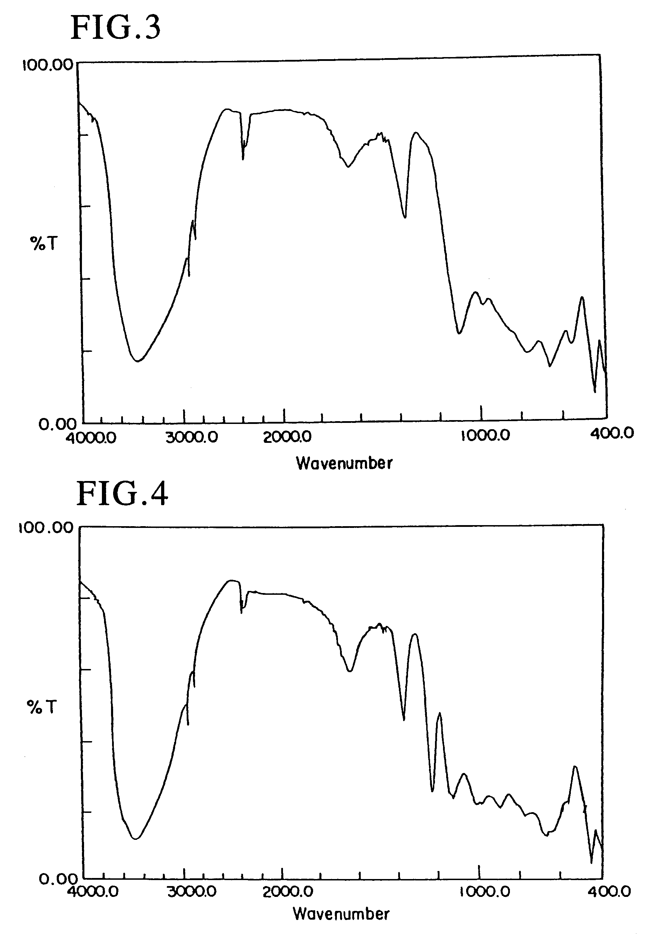

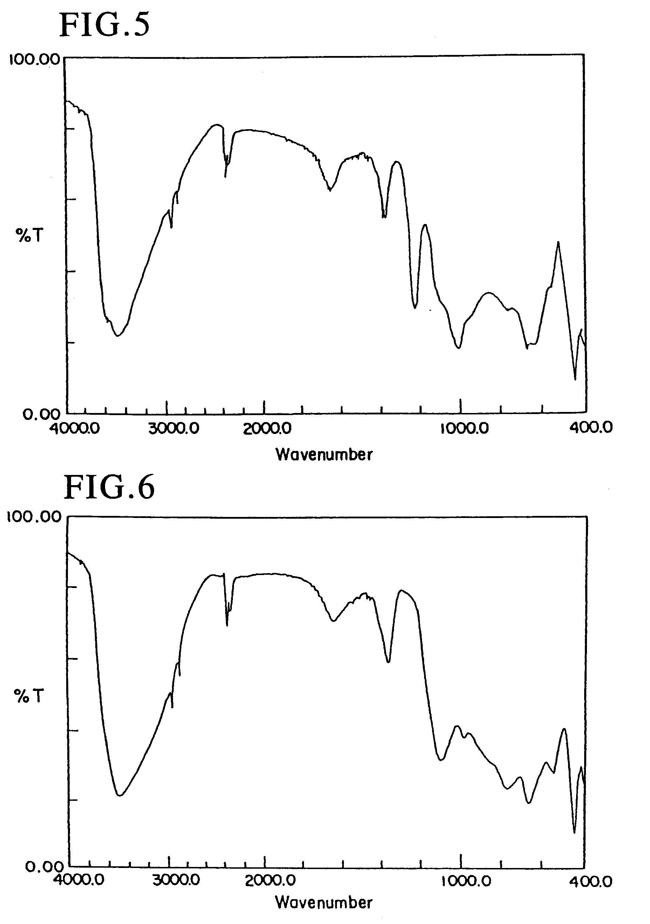

Fig. 3, 4, 5, 6, 7, 8 and 9 show infrared absorption spectra of the powders obtained in Examples 3, 4, 5, 6, 7, 8 and 9, respectively. Characteristic curves J1 to J6 of Fig. 11 are X-ray diffraction spectra of the powders obtained in Examples 1 to 6, respectively.

**Table 1**

| | Example 3 | Example 4 | Example 5 | Example 6 | Example 7 | Example 8 | Example 9 |
|---|---|---|---|---|---|---|---|
| A1 raw material Conc. (in terms of Al₂O₃) Loading | sodium aluminate 18.6 wt% 108g | aluminum sulfate 15.2 wt% 132g | aluminum nitrate 15.2 wt% 132g | aluminum sulfate 15.2 wt% 132g | sodium aluminate 18.6 wt% 108g | aluminum sulfate 15.2 wt% 132g | aluminum nitrate 15.2 wt% 132g |
| Mg raw material Conc. (in terms of MgO) Loading | magnesium chloride 19.8 wt% 184g | magnesium chloride 19.8 wt% 184g | magnesium chloride 19.8 wt% 184g | magnesium chloride 19.8 wt% 184g | magnesium chloride 19.8 wt% 184g | magnesium chloride 19.8 wt% 184g | magnesium chloride 19.8 wt% 184g |
| Acid treatment | hydrochloric acid | nitric acid | acetic acid | nitric acid | hydrochloric acid | nitric acid | acetic acid |
| Intercalated ions | sodium polyphosphate 250g | sodium silicate 61g sodium polyphosphate 125g | sodium silicate 122g | sodium silicate 41g sodium polyphosphate 125g | sodium polyphosphate 500g | sodium silicate 122g sodium polyphosphate 250g | sodium silicate 244g |

**Table 2**

| | Example 3 | Example 4 | Example 5 | Example 6 | Example 7 | Example 8 | Example 9 |
|---|---|---|---|---|---|---|---|
| Yield (g) | 139g | 115g | 90g | 95g | 215g | 169g | 122g |
| Surface treatment Coating % | phosphoric ester | sodium stearate | sodium stearate | sodium stearate | phosphoric ester | phosphoric ester | phosphoric ester |
| | 5.0 % | 8.0 % | 4.0 % | 2.0 % | 5.0 % | 8.0 % | 4.0 % |
| BET surface area | 20.8m²/g | 15.1m²/g | 18.3m²/g | 14.7m²/g | 25.3m²/g | 19.1m²/g | 21.4m²/g |
| Sec. particle size | 1.8µ | 1.4µ | 1.1µ | 1.2µ | 2.0µ | 1.7µ | 1.4µ |

### Example 10

1.5 liters of a mixture solution containing 0.2 mol/liter Al, 0.2 mol/liter Zn, 0.24 mol/liter Mg and 0.1 mol/liter CO₃ which was obtained by dissolving aluminum sulfate, magnesium chloride, zinc sulfate and sodium carbonate in water was reacted while holding its pH at 9 to 10 with the use of sodium hydroxide.

The thus obtained 1.5 liters of reaction mixture was autoclaved, and 1 liter of an aqueous solution having, dissolved therein, 122 g of sodium silicate (29.2% by weight in terms of SiO₂) was added to the reaction mixture and agitated for 30 min to thereby effect intercalation of the silicate ions. Thereafter, filtration, washing and drying were conducted. Thus, 110 g of white powder was obtained. This powder had the following composition:

Mg_{2.4}Zn_{2.0}Al₂(Si₃O₇)(OH)_{12.8}·0.2H₂O.

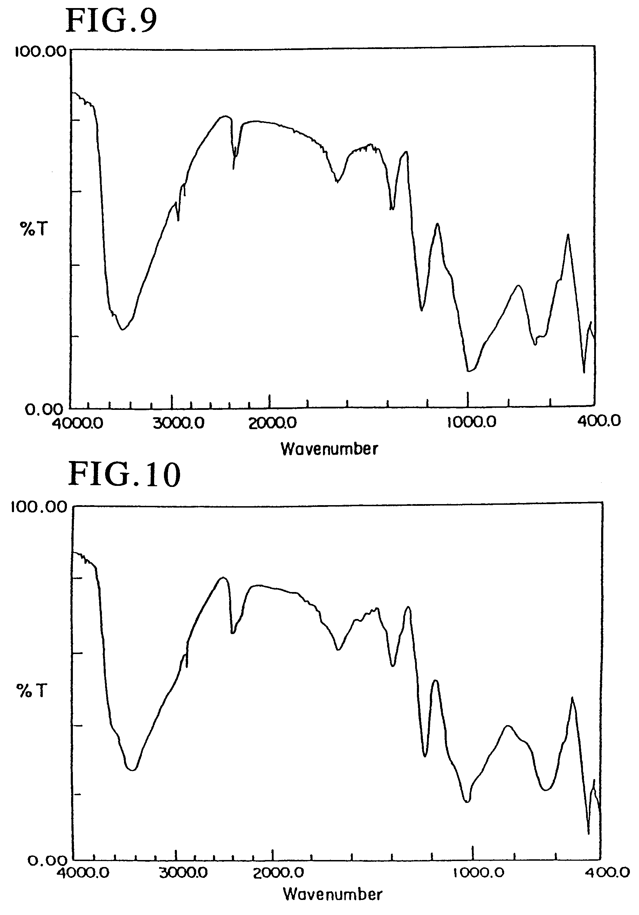

The thus obtained 100 g of powder was suspended in 2 liters of water. 4.5 g of phosphoric ester was added to the suspension, followed by agitation, washing, filtration and drying. Thus, 100.5 g of surface-treated product was obtained. This surface-treated product had a coating ratio of 3.2%, a BET specific surface area of 16.4 m²/g and an average secondary particle size of 11.5 Å. Fig. 10 shows an infrared absorption spectrum of the surface-treated powder.

### Example 11

In this Example, a film was prepared from the hydrotalcite compound, and its transparency and heat insulating property were evaluated. First, 5 parts by weight of the hydrotalcite compound obtained in Example 1 was added to 100 parts by weight of polyethylene, extruded through a T die and drawn, thereby obtaining a film of 200 µm in thickness. Its transparency was evaluated by visual observation, which showed the complete absence of foreign matter and desirable transparency. Its heat insulating property was evaluated by the infrared absorptivity. Specifically, the infrared absorptivities of the obtained film were measured at infrared wavelengths ranging from 2000 cm⁻¹ (5 µm) to 400 cm⁻¹ (25 µm), and each measurement obtained every 20 cm⁻¹ was multiplied by the relative radiation energy of the black body to thereby obtain products whose average was evaluated as a heat insulation efficiency. The greater the heat insulation efficiency, the greater the heat insulating effect. The measuring results showed that the heat insulation efficiency of the film was 57.73%.

Subsequently, a film was prepared with the use of each of the hydrotalcite compounds obtained in Examples 2 and 3 and its transparency and heat insulation were evaluated in the same manner as above. Further, as Comparative Example 1, a film was prepared with the use of the hydrotalcite compound described in Example 1 of Japanese Patent Application Laid-Open Specification No. 104141/1985 and its transparency and heat insulation were evaluated in the same manner as above. Still further, the same evaluations were conducted with respect to a film having no hydrotalcite compound mixed therein. The results are given in Table 3.

### Examples 12 to 14

Each of the hydrotalcite compounds listed in Table 4 was added in an amount of 5% by weight to a resin composition composed of 100 parts by weight of PVC (polyvinyl chloride) having an average polymerization degree of 1050, 50 parts by weight of dioctyl phthalate, 3 parts by weight of barium zinc stearate (trade name "M-179" produced by Dainippon Ink & Chemicals, Inc.) and 0.2 part by weight of sorbitan monostearate. The mixture was homogeneously mixed by means of Henschel mixer and kneaded by means of Brabender mixer at 170°C. The resultant mixture was shaped with the use of a T die into a film of 0.1 mm in thickness and subjected to a heat insulation test.

In Table 4, the type of hydrotalcite compound mixed in the resin is indicated by the mark "o". The symbol "A" of the Table represents a hydrotalcite compound of the formula:

Mg_{4.4}·Al₂(Si₃O₇)_{0.5}(P₆O₁₆)_{0.5}(OH)_{12.8}·0.3H₂O,

having a surface coated with phosphoric ester at a coating ratio of 4% by weight, which had a BET specific surface area of 15.3 m²/g and an average secondary particle size of 1.1 µm. The symbol "B" of the Table represents a hydrotalcite compound of the formula:

Mg₄·Al₂(Si₃O₇)_{1.0}(OH)_{12.8}·2H₂O,

having a surface coated with phosphoric ester at a coating ratio of 2.5% by weight, which had a BET specific surface area of 13.9 m²/g and an average secondary particle size of 1.5 µm. The symbol "C" of the Table represents a hydrotalcite compound of the formula:

Mg_{4.4}·Al₂(P₆O₁₆)_{1.0}(OH)_{12.8}·0.3H₂O,

having a surface coated with phosphoric ester at a coating ratio of 5% by weight, which had a BET specific surface area of 20.8 m²/g and an average secondary particle size of 1.8 µm.

The heat insulation test was performed in the following manner. An arched tunnel frame of 1.5 m in diameter and 2 m in length was built and covered with each of the films to thereby create sealed condition, and its internal temperature was measured. The tunnel was installed at Kamiichi-machi of Toyama Prefecture, and the air temperature was measured in the center of the tunnel at 50 cm above the ground. The measuring of the air temperature was conducted every one hour from 6 p.m. to 6 a.m. of the next morning for a period of November 14, 1994 to November 20, 1994. The measurements were averaged and the results are given in Table 4. In Comparative Example 2 of Table 4, no hydrotalcite compound was used and a film was prepared with the use of only the above resin composition.

**Table 3**

| | Example 1 | Example 2 | Example 3 | None added | Comp. Ex. 1 |
|---|---|---|---|---|---|
| Transparency | good | good | good | good | good |
| Heat insulation | 57.73% | 58.89% | 56.54% | 24.25% | 44.30% |

**Table 4**

| | Example 12 | Example 13 | Example 14 | Comp. Ex. 2 |
|---|---|---|---|---|
| A | o | | | |
| B | | o | | |
| C | | | o | |
| Heat insulation | 6.7°C | 6.4°C | 6.5°C | 5.0°C |

### Examples 15 to 17

5 parts by weight of each of the hydrotalcite compounds listed in Table 5 was added to 100 parts by weight of low-density polyethylene (trade name "LD-F531" produced by Mitsubishi Kasei Vinyl). The mixture was homogeneously mixed by means of Henschel mixer and kneaded by means of Brabender mixer at 180°C. The resultant mixture was shaped with the use of a T die into a film of 0.1 mm in thickness and subjected to a heat insulation test.

The heat insulation test was conducted under the same conditions for the same period as in Examples 12 to 14. The results are given in Table 5. The symbols "A", "B" and "C" of Table 5 correspond to those of Table 4 and represent the hydrotalcite compounds. In Comparative Example 3, no hydrotalcite compound was used and a film was prepared with the use of only the above resin as in Comparative Example 2.

### Examples 18 to 20

5 parts by weight of each of the hydrotalcite compounds listed in Table 6 was added to 100 parts by weight of ethylene/vinyl acetate copolymer having a vinyl acetate content of 14% by weight. The mixture was homogeneously mixed by means of Henschel mixer and kneaded by means of Brabender mixer at 180°C. The resultant mixture was shaped with the use of a T die into a film of 0.1 mm in thickness and subjected to a heat insulation test.

The heat insulation test was conducted under the same conditions for the same period as in Examples 12 to 14. The results are given in Table 6. The symbols "A", "B" and "C" of Table 6 correspond to those of Table 4 and represent the hydrotalcite compounds. In Comparative Example 4, no hydrotalcite compound was used and a film was prepared with the use of only the above resin as in Comparative Example 2.

**Table 5**

| | Example 15 | Example 16 | Example 17 | Comp. Ex. 3 |
|---|---|---|---|---|
| A | o | | | |
| B | | o | | |
| C | | | o | |
| Heat insulation | 6.0°C | 6.1°C | 6.0°C | 4.8°C |

**Table 6**

| | Example 18 | Example 19 | Example 20 | Comp. Ex. 4 |
|---|---|---|---|---|
| A | o | | | |
| B | | o | | |
| C | | | o | |
| Heat insulation | 6.1°C | 6.1°C | 6.2°C | 4.9°C |

In Examples 12 to 20, the film transparency was checked by visual observation in addition to the heat insulation test. All the films were transparent and the sunlight transmission values therethrough were satisfactory. Moreover, the weather resistance of each of the films of Examples 11 to 19 was evaluated at Kamiichi-machi of Toyama Prefecture. In this weather resistance test, each of the films was secured to a frame mount and exposed to the sunlight for 12 months. Upon completion of the test, it was observed that all the films of Examples 11 to 19 had good appearance, satisfactory capability of elongation and no transparency change.

## Claims

1. A hydrotalcite compound represented by the formula:
(Mg and/or Zn)ₐAl₂(condensed silicate ion and/or condensed phosphate ion)^{m-}_{2/m}·bH₂O (1)
wherein a satisfies the relationship 2 ≦ a ≦ 8, m is an integer of 1 or greater, b satisfies the relationship b ≦ 4 and the condensed silicate ion and/or condensed phosphate ion contains at least 2 mol of Si and/or P,
said hydrotalcite compound having a crystal surface coated with 0.1 to 10% by weight of an anionic surfactant, and
said hydrotalcite compound having intercalated anions composed mainly of condensed silicate ions and/or condensed phosphate ions.

2. The hydrotalcite compound according to claim 1, wherein, in the formula (1), a satisfies the relationship 3 ≦ a ≦ 6 and whose powder X-ray diffraction pattern exhibits a maximum spacing of at least 10 Å.

3. The hydrotalcite compound according to claim 1, which has a BET specific surface area of 1 to 30 m²/g and an average secondary particle size of 0.05 to 2 µm.

4. The hydrotalcite compound according to claim 1, wherein the anionic surfactant is a phosphoric ester.

5. A process for producing a hydrotalcite compound, characterized in that a hydrotalcite compound having, intercalated therein, at least one anion selected from the group consisting of halide, nitrate and monocarboxylate ions is reacted with condensed silicate ions and/or condensed phosphate ions.

6. An infrared absorber characterized by containing as an active ingredient a hydrotalcite compound represented by the formula (1) defined in claim 1,
said hydrotalcite compound having a crystal surface coated with 0.1 to 10% by weight of an anionic surfactant, and
said hydrotalcite compound having intercalated anions composed mainly of condensed silicate ions and/or condensed phosphate ions.

7. An agricultural film characterized by comprising:
1 to 20% by weight of a hydrotalcite compound represented by the formula (1) defined in claim 1,
said hydrotalcite compound having a crystal surface coated with 0.1 to 10% by weight of an anionic surfactant, and
said hydrotalcite compound having intercalated anions composed mainly of condensed silicate ions and/or condensed phosphate ions, and
99 to 80% by weight of a thermoplastic resin.

8. The agricultural film according to claim 7, characterized in that said thermoplastic resin is a vinyl chloride resin, an olefin resin or an ethylene/vinyl acetate copolymer resin.
